# EUROPEAN PATENT SPECIFICATION

(11) **EP 4 095 042 B1**
(45) Date of publication and mention of the grant of the patent: **30.10.2024**
(21) Application number: 22175441.9
(22) Date of filing: 25.05.2022
(51) Int. Cl.: B64D 25/14

(54) **TIME-BASED CONTROL SYSTEM FOR INFLATABLE EVACUATION SLIDE**
ZEITBASIERTES STEUERUNGSSYSTEM FÜR AUFBLASBARE NOTRUTSCHE
SYSTÈME DE COMMANDE BASÉ SUR LE TEMPS POUR GLISSIÈRE D'ÉVACUATION GONFLABLE

(30) Priority: 27.05.2021 IN 202141023637; 21.02.2022 US 202217676431
(43) Date of publication of application: 30.11.2022
(73) Proprietor: Goodrich Corporation, Charlotte, NC 28217-4578 (US)
(72) Inventor: JOHN, Poly Puthur, 695015 Trivandrum, Kerala (IN); SALDANHA, Nikhil Anthony, 560005 Bangalore, Karnataka (IN); MUGERAYA, Bhavik, 560083 Bangalore, Karnataka (IN)
(74) Representative: Dehns

(56) References cited:
- EP-A1- 3 822 170
- GB-A- 2 342 622
- US-A1- 2020 094 976
- US-B1- 8 839 473

## Description

### FIELD

The present disclosure relates generally to inflatable evacuation systems and, more particularly, to methods and apparatus used to control inflation of such inflatable evacuation systems.

### BACKGROUND

Inflatable evacuation systems may be found on various structures, including aircraft, boats, offshore drilling platforms, and the like. The systems are typically equipped with an inflatable device, such as, for example, an inflatable slide or an inflatable raft, configured to facilitate rapid evacuation of persons in the event of an emergency. The slides or rafts are typically stored in an uninflated condition on the structure - *e.g.*, a commercial aircraft - in a location readily accessible for deployment.

Systems used to inflate the slide or raft typically employ gas stored within a cylinder or tank at high pressure, which is discharged into the inflatable. Due to changes in the densities of gasses caused by variations in temperature, the volume of gas needed to achieve the desired inflation pressure varies with ambient temperature. In this regard, a greater volume of gas is needed to achieve the desired inflatable pressure at low ambient temperatures as compared to the volume of gas needed to achieve the desired pressure at higher ambient temperatures. The volume of gas stored in the pressurized cylinder and provided to the inflatable is configured to ensure that, even at the lowest ambient temperatures, the desired pressure within the inflatable is achieved. Thus, a greater volume of gas than what is needed and/or desired may be provided to the inflatable, particularly at higher ambient temperatures. To prevent over-inflation, current slides and rafts generally include one or more pressure relief valve(s) (PRVs) through which the excess gas may be vented. Some slides and rafts may also include (or may alternatively include) pressure and/or stretch sensors as part of a closed loop system to control the pressure within the inflatable during the inflation process. The PRVs and/or sensors tend to increase manufacturing, packaging, assembly, and/or maintenance requirements for the inflatable.

An inflation control system of the prior art is known from US2020094976A1 which, according to its abstract, discloses an inflation control system including a valve module and a controller. The valve module includes a first valve fluidly connected to a fluid source, a second valve fluidly connected to the first valve, and a pressure regulator fluidly connected to the second valve and an aspirator. The controller is in communication with the first valve.

### SUMMARY

An inflation control system for an inflatable as defined in claim 1 is provided. In accordance with various embodiments, the inflation control system may comprise a compressed fluid source and a valve module connected to the compressed fluid source. The valve control module may be configured to control a flow of gas to the inflatable. A temperature sensor may be configured to measure an ambient temperature and output an ambient temperature measurement. A controller may be operably coupled to the valve module. The controller may be configured to receive the ambient temperature measurement and determine an open-valve time based on the ambient temperature measurement, the open-valve time being a duration of time the valve module is in an open position.

In various embodiments, the controller may be configured to access an open-time versus temperature database. The controller may determine the open-valve time by looking up the ambient temperature measurement in the open-time versus temperature database and determining the open-valve time associated with the ambient temperature measurement.

In various embodiments, the valve module may include a main pneumatic valve configured to start and to stop the flow of gas. In various embodiments, the valve module may include a solenoid control valve connected to the controller and configured to operate the main pneumatic valve. The controller may be configured to energize the solenoid control valve for a length of time equal to the open-valve time. In various embodiments, the solenoid control valve may be a normally open valve.

In various embodiments, the valve module may include a pressure regulator valve. In various embodiments, an aspirator may be fluidly connected between the valve module and the inflatable. The temperature sensor may be mounted to the aspirator.

An evacuation system for an aircraft is also disclosed herein. In accordance with various embodiments, the evacuation system may comprise an inflatable tube and a compressed fluid source fluidly coupled to the inflatable tube. A valve module may be connected to the compressed fluid source and configured to control a flow of gas from the compressed fluid source to the inflatable tube. A temperature sensor may be configured to measure an ambient temperature and output an ambient temperature measurement. A controller may be operably coupled to the valve module. The controller may be configured to receive the ambient temperature measurement from the temperature sensor and determine an open-valve time based on the ambient temperature measurement, the open-valve time being a duration of time the valve module is in an open position.

In various embodiments, the controller may be configured to access an open-time versus temperature database. The controller may determine the open-valve time by looking up the ambient temperature measurement in the open-time versus temperature database and determining the open-valve time associated with the ambient temperature measurement.

In various embodiments, the valve module may include a main pneumatic valve configured to start and to stop the flow of gas from the compressed fluid source to the inflatable tube. In various embodiments, the valve module may include a solenoid control valve operably coupled to the controller and configured to operate the main pneumatic valve. In various embodiments, the controller may be configured to energize the solenoid control valve for a length of time equal to the open-valve time. In various embodiments, the solenoid control valve may be a normally open valve.

In various embodiments, the controller may be configured to start a timer corresponding to the open-valve time. The controller may be configured to de-energize the solenoid control valve in response to expiration of the timer. In various embodiments, an aspirator may be fluidly connected between the valve module and the inflatable tube. The temperature sensor may be mounted to the aspirator.

An article of manufacture including a tangible, non-transitory computer-readable storage medium having instructions stored thereon for controlling inflation of an evacuation slide is also disclosed herein, and defined in claim 11. In accordance with various embodiments, the instructions, in response to execution by a controller, cause the controller to perform operations, which may comprise receiving, by the controller, an ambient temperature measurement; determining, by the controller, an open-valve time based on the ambient temperature measurement; sending, by the controller, a first control signal to a valve module fluidly coupled between a compressed fluid source and the evacuation slide; starting, by the controller, a timer corresponding to the open-valve time; and sending, by the controller, a second control signal to the valve module after expiration of the timer. The first control signal may be configured to cause the valve module to translate from a closed position to an open position. In the open position, gas may flow from the compressed fluid source to the evacuation slide. The second control signal may be configured to cause the valve module to translate from the open position to the closed position. In the closed position, gas from the compressed fluid source may be prevented from flowing into the evacuation slide.

In various embodiments, determining, by the controller, the open-valve time based on the ambient temperature measurement may comprise accessing, by the controller, an open-time versus temperature database.

In various embodiments, sending, by the controller, the first control signal to the valve module may comprise energizing, by the controller, a solenoid control valve, the solenoid control valve being configured to operate a main pneumatic valve.

In various embodiments, the operations may further comprise determining, by the controller, a duration of time to energize the solenoid control valve using the open-time versus temperature database. In various embodiments, the solenoid control valve may be a normally open valve.

These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having an evacuation assembly, in accordance with various embodiments;
FIG. 2 illustrates an evacuation slide in a deployed position, in accordance with various embodiments;
FIG. 3 illustrates a schematic of an inflation control system, in accordance with various embodiments;
FIGs. 4A and 4B illustrate a schematic of pneumatic valve in a closed position and an open position, respectively, in accordance with various embodiments;
FIG. 5 illustrates a flowchart describing various steps employed during inflation of an evacuation slide, in accordance with various embodiments;
FIG. 6 illustrates a schematic of a ground-test inflation control system, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein, if within the scope of the appended claims. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option.

Surface lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.

The systems and methods disclosed herein may find particular use in connection with aircraft evacuation slides. However, various aspects of the disclosed systems and methods may be adapted for performance in a variety of other inflatable assemblies, for example, inflatable raft assemblies, and/or any other assemblies having inflatable structures. As such, numerous applications of the present disclosure may be realized.

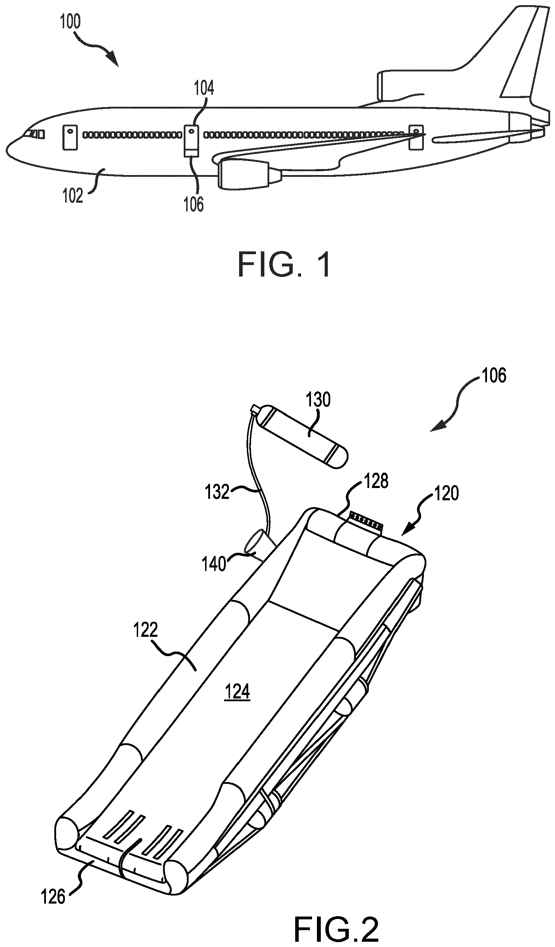

Referring now to FIG. 1, an aircraft 100 is shown. Aircraft 100 may include a fuselage 102 having plurality of exit doors, including an exit door 104. Aircraft 100 may include one or more evacuation systems positioned near a corresponding exit door. For example, aircraft 100 includes an evacuation system 106 positioned near exit door 104. In the event of an emergency, exit door 104 may be opened by a passenger or crew member of aircraft 100. In various embodiments, evacuation system 106 may deploy in response to exit door 104 being opened. It is contemplated and understood that evacuation system 106 may deploy in response to other actions taken by a passenger or crew member such as depression of a button, actuation of a lever, or the like.

With reference to FIG. 2, evacuation system 106 is illustrated with the evacuation slide in an inflated or "deployed" position. In accordance with various embodiments, evacuation system 106 includes an evacuation slide 120 and a compressed fluid source 130 configured to deliver a pressurized gas to inflate evacuation slide 120. During deployment, an inflatable tube 122 (or a plurality of inflatable tubes) of evacuation slide 120 is inflated using pressurized gas from compressed fluid source 130. Evacuation slide 120 may comprise a sliding surface 124 secured to the inflatable tube 122 and configured for sliding passenger egress from the emergency exit door 104 of the aircraft 100, with momentary reference to FIG. 1, to a ground surface in the event of an evacuation on land or to a water surface in the event of an evacuation on water. Evacuation slide 120 includes a toe end 126 and a head end 128 opposite toe end 126. Head end 128 may be coupled to an aircraft structure (e.g., fuselage 102 in FIG. 1). Sliding surface 124 extends from head end 128 to toe end 126. Evacuation slide 120 is illustrated as a single lane slide. However, evacuation slide 120 may comprise any number of lanes.

Compressed fluid source 130 is fluidly coupled to evacuation slide 120. For example, compressed fluid source 130 may be fluidly coupled to inflatable tube 122 via a hose, or conduit, 132. In various embodiments, evacuation system 106 may include an aspirator 140 fluidly coupled between compressed fluid source 130 and evacuation slide 120. Aspirator 140 is configured to entrain ambient air with gas output from compressed fluid source 130. For example, in response to deployment of evacuation slide 120, the gas from compressed fluid source 130 flows into aspirator 140 and causes aspirator 140 to draw in ambient air from the environment. The combination of gas flow from compressed fluid source 130 and the environmental gas is then directed into evacuation slide 120, thereby inflating inflatable tube 122.

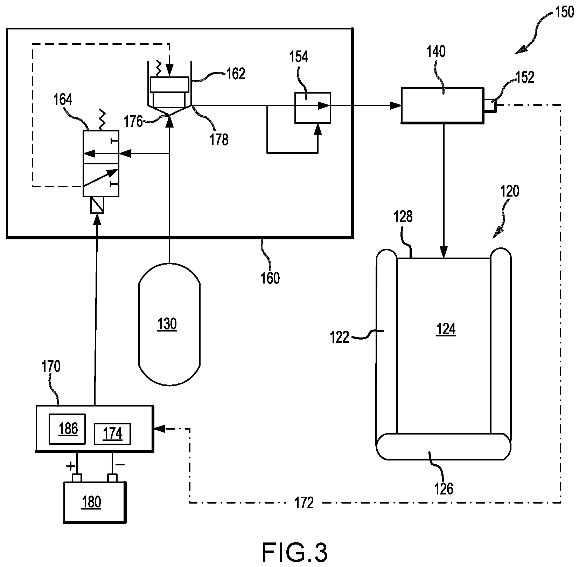

Referring now to FIG. 3, an inflation control system 150 for controlling inflation of evacuation slide 120 is illustrated. Inflation control system 150 includes one or more temperature sensor(s) 152 configured to sense or monitor the ambient temperature during the inflation process. As described in further detail below, inflation control system 150 employs real-time temperature data to determine how long (i.e. a duration of time) gas should be provide to evacuation slide 120 to achieve a desired inflation pressure.

Inflation control system 150 includes a valve module 160, compressed fluid source 130, which is filled with a high-pressure gas (or, in various embodiments, a gas generator configured to generate a high-pressure gas), aspirator 140, a controller 170, and a power source 180, such as, for example, a battery or charged capacitor. In various embodiments, the power source 180 is a dedicated source configured to power the temperature sensor 152, as well as each of the valve module 160 and the controller 170. To provide a dedicated source of direct current power, the power source 180 may comprise, for example, a lithium-ion battery or an ultracapacitor, each configured to store energy at a high density for controlling the rapid sequence of events that occur during an inflation process of the evacuation slide 120. As illustrated in FIG. 3, real-time data from the temperature sensor 152 (i.e., ambient temperature measurements) are transmitted to the controller 170 via a temperature sensor bus 172. In various embodiments, the controller 170 may include a general-purpose processor, a digital signal processor (DSP), an application specific integrated circuit (ASIC), a field programmable gate array (FPGA) or some other programmable logic device, discrete gate or transistor logic, discrete hardware components, or any combination thereof. A tangible, non-transitory computer-readable storage medium 174 may be in communication with controller 170. Storage medium 174 may comprise any tangible, non-transitory computer-readable storage medium known in the art. The storage medium 174 has instructions stored thereon that, in response to execution by controller 170, cause controller 170 to perform operations related to controlling the inflation of evacuation slide 120.

In accordance with various embodiments, the valve module 160 is configured to open and close a main pneumatic valve 162 based on a control signal received from the controller 170. More specifically, based on preset control logic and the real-time data received from the temperature sensor 152, controller 170 opens or closes the main pneumatic valve 162 in order to turn on or turn off the flow of high-pressure gas from the compressed fluid source 130 to the inflatable tube 122. In various embodiments, the valve module 160 may further comprise a control valve 164 configured to operate the main pneumatic valve 162 between an open position and a closed position. In various embodiments, the valve module 160 may also include a pressure regulator valve 154 configured to prevent the occurrence of an overpressure situation at the aspirator 140 or the inflatable tube 122.

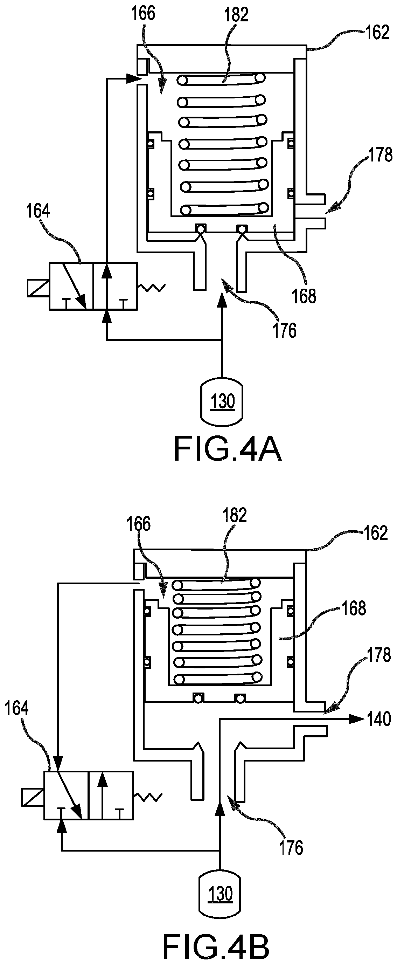

With reference to FIGs. 4A and 4B, additional details of control valve 164 and main pneumatic valve 162 are illustrated. In various embodiments, control valve 164 may be a normally open valve, such as, for example, a three-way, two-position normally open solenoid valve, and main pneumatic valve 162 may be a normally closed poppet valve. In this regard, energizing control valve 164 (i.e. providing electric current to control valve 164), as shown in FIG. 4B, opens the main pneumatic valve 162. De-energizing control valve 164 (i.e. stopping the flow of electric current to control valve 164), as shown in FIG. 4A, closes main pneumatic valve 162.

Referring to FIG. 4A, prior to deployment of the evacuation slide 120, control valve 164 is de-energized (i.e., no current is being supplied to control valve 164). In the de-energized state, control valve 164 is open and gas, from compressed fluid source 130, flows from control valve 164 into an upper chamber 166 of main pneumatic valve 162. The flow of gas into upper chamber 166 increases the pressure in upper chamber 166 and forces a poppet 168 of main pneumatic valve 162 toward an inlet 176 of main pneumatic valve 162. The pressure and/or force applied to poppet 168 locates poppet 168 in a position that blocks an outlet 178 of main pneumatic valve 162. Stated differently, the gas in upper chamber 166 forces main pneumatic valve 162 into a closed position. In the closed position, the flow of fluid between inlet 176 and outlet 178 of main pneumatic valve 162 is blocked by poppet 168. In various embodiments, main pneumatic valve 162 may also include a biasing member 182 located in upper chamber 166. Biasing member 182 is configured to apply a biasing force to poppet 168, thereby forcing poppet 168 toward inlet 176.

Referring to FIG. 4B, during deployment of evacuation slide 120, control valve 164 is energized (i.e., current is supplied to control valve 164). In the energized state, control valve 164 is closed such that gas, from compressed fluid source 130, flows to inlet 176 rather than upper chamber 166. The stoppage of gas flow into upper chamber 166 (e.g., by venting the high pressure fluid in the upper chamber 166) along with the increased flow into inlet 176 forces poppet 168 away from inlet 176. Stated differently, poppet 168 translates away from inlet 176 in response to the pressure applied to poppet 168 by the gas at inlet 176 exceeding the pressure in upper chamber 166 and the force applied by biasing member 182. Thus, when control valve 164 is energized, the gas provided through inlet 176 forces main pneumatic valve 162 into an open position. In the open position, poppet 168 is removed from outlet 178, thereby allowing gas, from compressed fluid source 130, to flow into inlet 176 and out outlet 178. Returning to FIG. 3, gas flowing out outlet 178 is provided to aspirator 140 and then inflatable tube 122.

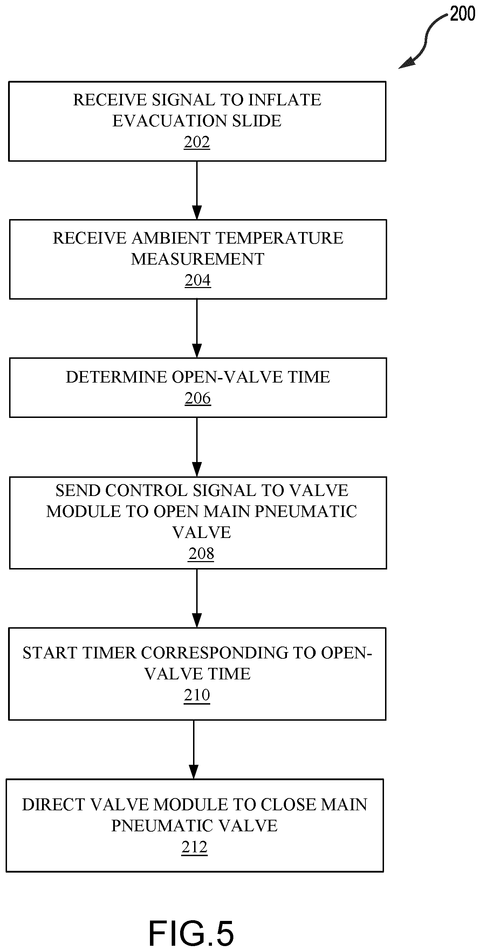

Referring now to FIG. 5, a method 200 for controlling inflation of an evacuation slide is provided. In describing the various steps of method 200, reference is made to the components of the inflation control system 150 described above with reference to FIG. 3. In accordance with various embodiments, method 200 includes controller 170 receiving a signal to begin inflation of the evacuation slide 120 (step 202). The signal to inflate the evacuation slide 120 may sent to controller 170 in response to deployment of evacuation system 106 (e.g., in response to exit door 104 being opened, a button being depressed, a lever being actuated, etc.).

Controller 170 then receives an ambient temperature measurement from temperature sensor 152 (step 204) and determines an open-valve time based on the ambient temperature measurement (step 206). As used herein, "open-valve time" refers to the duration of time that the valve module 160 (e.g., main pneumatic valve 162) is in the open position, whereby gas may flow from compressed fluid source 130 into inflatable tube 122. Controller 170 may determine the open-valve time by accessing an open-time versus temperature database 186. The open-time versus temperature database 186 includes a library of open-valve times (i.e., the duration of time that control valve 164 should be energized) associated with achieving a desired inflation pressure of evacuation slide 120 at particular ambient temperatures. For example, at a first ambient temperature, the open-valve time may be a first duration of time (e.g., 1.05 seconds) and at a second ambient temperature that is less than the first ambient temperature, the open-valve time may be a second duration of time that is greater than the first duration of time (e.g., 1.20 seconds).

Controller 170 then transmits a control signal to the valve module 160 to open the main pneumatic valve 162 (step 208). In various embodiments, opening the main pneumatic valve 162 is accomplished by energizing, and closing, the normally open control valve 164. Following opening the main pneumatic valve 162, the evacuation slide 120 begins to inflate. Controller 170 may set, or start, a timer corresponding to the open-valve time simultaneously, or nearly simultaneously, with transmitting the control signal to the valve module 160 (step 210). After the main pneumatic valve 162 has been open for the open-valve time, controller 170 directs valve module 160 to close the main pneumatic valve 162, thereby halting the flow of pressurized gas to the inflatable tube 122 (step 212). In various embodiments, controller 170 directs the main pneumatic valve 162 to close in response to expiration of the timer (e.g., in response to the timer reaching zero, or in response to the timer going from zero to the open-valve time). In various embodiments, closing the main pneumatic valve 162 is accomplished by de-energizing, and thus opening, control valve 164.

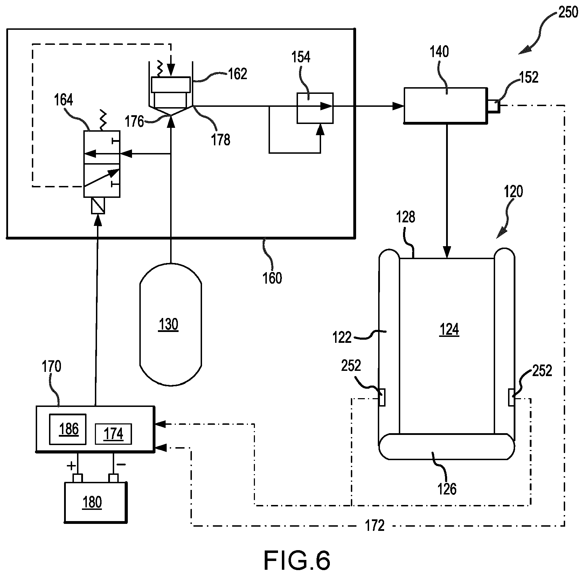

With reference to FIG. 6, a ground-test inflation control system 250 is illustrated. Ground-test inflation control system 250 may be employed to create the open-time versus temperature database 186. In this regard, ground-test inflation control system 250 is employed to establish a relationship between the duration of time that main pneumatic valve 162 is in the open position and achieving a desired inflation pressure at different test temperatures (i.e., at temperatures likely to be encountered during an inflation process). Ground-test inflation control system 250 includes the components of inflation control system 150 along with one or more sensor(s) 252 configured to monitor the inflation of evacuation slide 120. Sensors 252 may be mounted on the inflatable tube 122. In various embodiments, sensors 252 may comprise pressure sensors configured to measure a pressure within inflatable tube 122. In various embodiments, sensors 252 may comprise stretch sensors configured to monitor an elastic stretch or an elastic deformation of the fabric that forms inflatable tube 122 during the inflation process. Real-time data correlating to the ambient temperature measured by temperature sensor 152 and real-time data correlating the elastic stretch (or pressure) experienced by the inflatable tube 122 may be sent to controller 170 during the inflation process.

Based on the ambient temperature data and the elastic stretch (or pressure) data, the duration of time the main pneumatic valve 162 needs to be open to achieve the desired inflation pressure at various temperatures may be determined. In this regard, the open-time versus temperature database 186 is developed and embedded into the controller 170 based on testing performed using ground-test inflation control system 250. The open-time versus temperature database 186 will generally include information defining a duration of time the main pneumatic valve 162 needs to open to achieve a desired inflation pressure at a given ambient temperature. In other words, the open-time versus temperature database 186 will enable the controller 170 to determine the open-valve time based on the ambient temperature measurement received from temperature sensor 152.

The inflation control system described above provides several benefits over existing systems. Existing inflation systems, for example, use pressure relief valves assembled to the inflatable. The current design eliminates hard spots on the fabric and potential sources of leakage from the inflatable tube in the regions of the pressure relief valves. Eliminating the pressure relief valves from inflatable also reduces the maintenance requirements. Further, once the open-valve time is achieved, the inflatable tube will have attained the desired pressure, and excess gas flow is halted by the controller at the source of the high-pressure gas (i.e., upstream from the inflatable). Stopping the excess gas flow from the upstream region of the inflatable facilitates increasing the inflatable operating pressure. which can allow for a reduction in tube diameter to achieve the same tube strength. This also enables a reduction in the effective packing volume of the inflatable tube and the quantity of fabric used to construct the inflatable tube.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the invention is accordingly to be limited by nothing other than the appended claims

## Claims

1. An inflation control system for an inflatable, comprising:
a compressed fluid source (130);
a valve module (160) connected to the compressed fluid source and configured to control a flow of gas to the inflatable;
a temperature sensor (152) configured to measure an ambient temperature and output an ambient temperature measurement; and
a controller (170) operably coupled to the valve module, wherein the controller is configured to receive the ambient temperature measurement and determine an open-valve time based on the ambient temperature measurement, the open-valve time being a duration of time the valve module is in an open position, transmit a first control signal to the valve module to begin the flow of gas to the inflatable, start a timer corresponding to the open-valve time, and transmit a second control signal to halt the flow of gas to the inflatable after expiration of the timer.

2. The inflation control system of claim 1, wherein the controller (170) is configured to access an open-time versus temperature database, and wherein the controller determines the open-valve time by looking up the ambient temperature measurement in the open-time versus temperature database and determining the open-valve time associated with the ambient temperature measurement.

3. The inflation control system of claim 2, wherein the valve module includes a main pneumatic valve (162) configured to start and to stop the flow of gas.

4. The inflation control system of claim 3, wherein the valve module includes a solenoid control valve (164) operably coupled to the controller and configured to operate the main pneumatic valve.

5. The inflation control system of claim 4, wherein the controller is configured to energize the solenoid control valve for a length of time equal to the open-valve time.

6. The inflation control system of claim 4 or 5, wherein the solenoid control valve is a normally open valve.

7. The evacuation system of claim 5 or 6, wherein the controller is configured to de-energize the solenoid control valve in response to expiration of the timer.

8. The inflation control system of any of claims 4 to 7, wherein the valve module includes a pressure regulator valve (154).

9. The inflation control system of claim 1, further comprising an aspirator (140) fluidly connected between the valve module and the inflatable, wherein the temperature sensor is mounted to the aspirator.

10. An evacuation system for an aircraft, comprising:
an inflatable tube (122); and
an inflation control system (250) as claimed in any preceding claim for the inflatable tube,
the compressed fluid source fluidly coupled to the inflatable tube.

11. An article of manufacture including a tangible, non-transitory computer-readable storage medium having instructions stored thereon for controlling inflation of an evacuation slide and that, in response to execution by a controller, cause the controller to perform operations comprising:
receiving, by the controller, an ambient temperature measurement;
determining, by the controller, an open-valve time based on the ambient temperature measurement;
sending, by the controller, a first control signal to a valve module fluidly coupled between a compressed fluid source and the evacuation slide, the first control signal being configured to cause the valve module to translate from a closed position to an open position, wherein in the open position gas flows from the compressed fluid source to the evacuation slide;
starting, by the controller, a timer corresponding to the open-valve time; and
sending, by the controller, a second control signal to the valve module after expiration of the timer, the second control signal being configured to cause the valve module to translate from the open position to the closed position, wherein in the closed position gas flows from the compressed fluid source is prevented from flowing into the evacuation slide.

12. The article of claim 11, wherein determining, by the controller, the open-valve time based on the ambient temperature measurement comprises accessing, by the controller, an open-time versus temperature database.

13. The article of claim 12, wherein sending, by the controller, the first control signal to the valve module comprises energizing, by the controller, a solenoid control valve, the solenoid control valve being configured to operate a main pneumatic valve.

14. The article of claim 13, wherein the operations further comprise determining, by the controller, a duration of time to energize the solenoid control valve using the open-time versus temperature database.

15. The article of claim 14, wherein the solenoid control valve is a normally open valve.

## Patentansprüche

1. Aufblassteuersystem für ein aufblasbares Objekt, umfassend:
eine Druckfluidquelle (130);
ein Ventilmodul (160), das mit der Druckfluidquelle verbunden und eingerichtet ist, um einen Strom von Gas zu dem aufblasbaren Objekt zu steuern;
einen Temperatursensor (152), der eingerichtet ist, um eine Umgebungstemperatur zu messen und eine Umgebungstemperaturmessung auszugeben; und
eine Steuerung (170), die mit dem Ventilmodul wirkgekoppelt ist, wobei die Steuerung eingerichtet ist, um die Umgebungstemperaturmessung zu empfangen und basierend auf der Umgebungstemperaturmessung eine Offen-Ventil-Zeit zu bestimmen, wobei die Offen-Ventil-Zeit eine Zeitdauer ist, in der sich das Ventilmodul in einer offenen Position befindet, ein erstes Steuersignal an das Ventilmodul zu senden, um den Strom von Gas zu dem aufblasbaren Objekt zu beginnen, einen Zeitgeber zu starten, der der Offen-Ventil-Zeit entspricht, und ein zweites Steuersignal zu senden, um den Strom von Gas zu dem aufblasbaren Objekt nach Ablauf des Zeitgebers anzuhalten.

2. Aufblassteuersystem nach Anspruch 1, wobei die Steuerung (170) eingerichtet ist, um auf eine Datenbank für die Offen-Zeit gegenüber der Temperatur zuzugreifen, und wobei die Steuerung die Offen-Ventil-Zeit bestimmt, indem sie die Umgebungstemperaturmessung in der Datenbank für die Offen-Zeit gegenüber der Temperatur nachschlägt und die Offen-Ventil-Zeit bestimmt, die der Umgebungstemperaturmessung zugeordnet ist.

3. Aufblassteuersystem nach Anspruch 2, wobei das Ventilmodul ein pneumatisches Hauptventil (162) aufweist, das eingerichtet ist, um den Strom von Gas zu starten und zu stoppen.

4. Aufblassteuersystem nach Anspruch 3, wobei das Ventilmodul ein Magnetsteuerventil (164) aufweist, das mit der Steuerung wirkgekoppelt und eingerichtet ist, um das pneumatische Hauptventil zu betätigen.

5. Aufblassteuersystem nach Anspruch 4, wobei die Steuerung eingerichtet ist, um das Magnetsteuerventil für eine Zeitspanne zu aktivieren, die gleich der Offen-Ventil-Zeit ist.

6. Aufblassteuersystem nach Anspruch 4 oder 5, wobei das Magnetsteuerventil ein normal offenes Ventil ist.

7. Evakuierungssystem nach Anspruch 5 oder 6, wobei die Steuerung eingerichtet ist, um das Magnetsteuerventil als Reaktion auf den Ablauf des Zeitgebers zu deaktivieren.

8. Aufblassteuersystem nach einem der Ansprüche 4 bis 7, wobei das Ventilmodul ein Druckregelventil (154) aufweist.

9. Aufblassteuersystem nach Anspruch 1, ferner umfassend einen Aspirator (140), der zwischen dem Ventilmodul und dem aufblasbaren Objekt fluidverbunden ist, wobei der Temperatursensor an dem Aspirator montiert ist.

10. Evakuierungssystem für ein Flugzeug, umfassend:
einen aufblasbaren Schlauch (122); und
ein Aufblassteuersystem (250) nach einem der vorhergehenden Ansprüche für den aufblasbaren Schlauch,
die Druckfluidquelle, die mit dem aufblasbaren Schlauch fluidgekoppelt ist.

11. Herstellungsgegenstand mit einem greifbaren, nicht flüchtigen, computerlesbaren Speichermedium, auf dem Anweisungen zum Steuern eines Aufblasens einer Evakuierungsrutsche gespeichert sind, die als Reaktion auf eine Ausführung durch eine Steuerung die Steuerung veranlassen, Vorgänge durchzuführen, umfassend:
Empfangen, durch die Steuerung, einer Umgebungstemperaturmessung;
Bestimmen, durch die Steuerung, einer Offen-Ventil-Zeit basierend auf der Umgebungstemperaturmessung;
Senden, durch die Steuerung, eines ersten Steuersignals an ein Ventilmodul, das zwischen einer Druckfluidquelle und der Evakuierungsrutsche fluidgekoppelt ist, wobei das erste Steuersignal eingerichtet ist, um das Ventilmodul zu veranlassen, sich von einer geschlossenen Position in eine offene Position zu verschieben, wobei in der offenen Position Gas von der Druckfluidquelle zu der Evakuierungsrutsche strömt;
Starten, durch die Steuerung, eines Zeitgebers, der der Offen-Ventil-Zeit entspricht; und
Senden, durch die Steuerung, eines zweiten Steuersignals an das Ventilmodul nach Ablauf des Zeitgebers, wobei das zweite Steuersignal eingerichtet ist, um das Ventilmodul zu veranlassen, sich von der offenen Position in die geschlossene Position zu verschieben, wobei in der geschlossenen Position verhindert wird, dass Gas von der Druckfluidquelle in die Evakuierungsrutsche strömt.

12. Gegenstand nach Anspruch 11, wobei das Bestimmen, durch die Steuerung, der Offen-Ventil-Zeit basierend auf der Umgebungstemperaturmessung ein Zugreifen, durch die Steuerung, auf eine Datenbank für die Offen-Zeit gegenüber der Temperatur umfasst.

13. Gegenstand nach Anspruch 12, wobei das Senden, durch die Steuerung, des ersten Steuersignals an das Ventilmodul ein Aktivieren, durch die Steuerung, eines Magnetsteuerventils umfasst, wobei das Magnetsteuerventil eingerichtet ist, um ein pneumatisches Hauptventil zu betätigen.

14. Gegenstand nach Anspruch 13, wobei die Vorgänge ferner ein Bestimmen, durch die Steuerung, einer Zeitdauer zum Aktivieren des Magnetsteuerventils unter Verwendung der Datenbank für die Offen-Zeit gegenüber der Temperatur umfassen.

15. Gegenstand nach Anspruch 14, wobei das Magnetsteuerventil ein normal offenes Ventil ist.

## Revendications

1. Système de commande de gonflage pour un élément gonflable, comprenant :
une source de fluide comprimé (130) ;
un module de vanne (160) connecté à la source de fluide comprimé et configuré pour commander un écoulement de gaz vers l'élément gonflable ;
un capteur de température (152) configuré pour mesurer une température ambiante et délivrer une mesure de température ambiante ; et
un dispositif de commande (170) couplé de manière fonctionnelle au module de vanne, dans lequel le dispositif de commande est configuré pour recevoir la mesure de température ambiante et déterminer un temps d'ouverture de vanne sur la base de la mesure de température ambiante, le temps d'ouverture de vanne étant une durée de temps pendant laquelle le module de vanne est dans une position ouverte, transmettre un premier signal de commande au module de vanne pour commencer l'écoulement de gaz vers l'élément gonflable, démarrer une minuterie correspondant au temps d'ouverture de vanne, et transmettre un second signal de commande pour arrêter l'écoulement de gaz vers l'élément gonflable après l'expiration de la minuterie.

2. Système de commande de gonflage selon la revendication 1, dans lequel le dispositif de commande (170) est configuré pour accéder à une base de données de temps d'ouverture par rapport à la température, et dans lequel le dispositif de commande détermine le temps d'ouverture de vanne en recherchant la mesure de température ambiante dans la base de données de temps d'ouverture par rapport à la température et en déterminant le temps d'ouverture de vanne associé à la mesure de température ambiante.

3. Système de commande de gonflage selon la revendication 2, dans lequel le module de vanne comporte une vanne pneumatique principale (162) configurée pour démarrer et arrêter l'écoulement de gaz.

4. Système de commande de gonflage selon la revendication 3, dans lequel le module de vanne comporte une vanne de commande à solénoïde (164) couplée de manière fonctionnelle au dispositif de commande et configurée pour actionner la vanne pneumatique principale.

5. Système de commande de gonflage selon la revendication 4, dans lequel le dispositif de commande est configuré pour alimenter la vanne de commande à solénoïde pendant une durée égale au temps d'ouverture de vanne.

6. Système de commande de gonflage selon la revendication 4 ou 5, dans lequel la vanne de commande à solénoïde est une vanne normalement ouverte.

7. Système d'évacuation selon la revendication 5 ou 6, dans lequel le dispositif de commande est configuré pour désalimenter la vanne de commande à solénoïde en réponse à l'expiration de la minuterie.

8. Système de commande de gonflage selon l'une quelconque des revendications 4 à 7, dans lequel le module de vanne comporte une vanne de régulation de pression (154).

9. Système de commande de gonflage selon la revendication 1, comprenant également un aspirateur (140) connecté fluidiquement entre le module de vanne et l'élément gonflable, dans lequel le capteur de température est monté sur l'aspirateur.

10. Système d'évacuation d'aéronef pour un aéronef, comprenant :
un tube gonflable (122) ; et
un système de commande de gonflage (250) selon une quelconque revendication précédente pour le tube gonflable,
la source de fluide comprimé couplée fluidiquement au tube gonflable.

11. Article manufacturé comportant un support de stockage tangible et non transitoire lisible par ordinateur sur lequel sont stockées des instructions pour commander le gonflage d'une glissière d'évacuation et qui, en réponse à l'exécution par un dispositif de commande, amènent le dispositif de commande à exécuter des opérations comprenant :
la réception, par le dispositif de commande, d'une mesure de température ambiante ;
la détermination, par le dispositif de commande, d'un temps d'ouverture de vanne sur la base de la mesure de température ambiante ;
l'envoi, par le dispositif de commande, d'un premier signal de commande à un module de vanne couplé fluidiquement entre une source de fluide comprimé et la glissière d'évacuation, le premier signal de commande étant configuré pour amener le module de vanne à se déplacer d'une position fermée à une position ouverte, dans lequel, dans la position ouverte, le gaz s'écoule de la source de fluide comprimé à la glissière d'évacuation ;
le déclenchement, par le dispositif de commande, d'une minuterie correspondant au temps d'ouverture de vanne ; et
l'envoi, par le dispositif de commande, d'un second signal de commande au module de vanne après l'expiration de la minuterie, le second signal de commande étant configuré pour amener le module de vanne à se déplacer de la position ouverte à la position fermée, dans lequel, dans la position fermée, le gaz qui s'écoule de la source de fluide comprimé est empêché de s'écouler dans la glissière d'évacuation.

12. Article selon la revendication 11, dans lequel la détermination, par le dispositif de commande, du temps d'ouverture de vanne sur la base de la mesure de température ambiante comprend l'accès, par le dispositif de commande, à une base de données de temps d'ouverture par rapport à la température.

13. Article selon la revendication 12, dans lequel l'envoi, par le dispositif de commande, du premier signal de commande au module de vanne comprend l'alimentation, par le dispositif de commande, d'une vanne de commande à solénoïde, la vanne de commande à solénoïde étant configurée pour actionner une vanne pneumatique principale.

14. Article selon la revendication 13, dans lequel les opérations comprennent également la détermination, par le dispositif de commande, d'une durée de temps pour alimenter la vanne de commande à solénoïde à l'aide de la base de données de temps d'ouverture par rapport à la température.

15. Article selon la revendication 14, dans lequel la vanne de commande à solénoïde est une vanne normalement ouverte.
